# EUROPÄISCHE PATENTANMELDUNG

(11) **EP 2 581 199 A1**
(43) Veröffentlichungstag der Anmeldung: **17.04.2013**
(21) Anmeldenummer: 12006953.9
(22) Anmeldetag: 08.10.2012
(51) Int. Cl.: B29C 47/08, B29C 47/70, B29C 47/68, B29C 47/92

(54) **Vorrichtung zum Verteilen einer Kunststoffschmelze**

(30) Priorität: 12.10.2011 DE 202011106715 U
(71) Anmelder: Maag Pump Systems GmbH, 63762 Großostheim (DE)
(72) Erfinder: Steinmann, Markus, 8052 Zürich (CH)
(74) Vertreter: Spranger, Stephan

(57) **Zusammenfassung**

Die Erfindung betrifft eine Vorrichtung zum Verteilen einer Kunststoffschmelze, mit einem Gehäusegrundkörper (1), welcher zumindest einen Eintrittskanal (2) und zumindest einen Austrittskanal (3) für die Kunststoffschmelze aufweist, wobei zwischen dem zumindest einen Eintrittskanal (2) und dem zumindest einen Austrittskanal (3) zumindest eine Aufnahmeöffnung (4) verläuft zur Aufnahme zumindest eines darin bewegbaren Verteilerkörpers (5), wobei der Verteilerkörper (5) dort durchtretende Verteilerkanäle (6, 7) aufweist, durch welche die Kunststoffschmelze durchtritt, wobei in einer Durchlassposition des Verteilerkörpers (5) über zumindest einen der Verteilerkanäle (6) eine Fluidverbindung zwischen dem Eintrittskanal (2) und dem Austrittskanal (3) besteht, und wobei in einer Anfahrposition des Verteilerkörpers (5) eine Fluidverbindung zwischen dem Eintrittskanal (2) und dem zumindest einen der Verteilerkanäle (7) steht, wobei der Verteilerkanal (7) eine Ableitungsöffnung (8) für die Kunststoffschmelze aufweist, wobei der Verteilerkörper (5) nur über um die dort durchtretenden Verteilerkanäle (6, 7) herum angeordnete Dichtflächen (9, 10, 11) gegenüber dem Gehäusegrundkörper (1) im Bereich der Aufnahmeöffnung (4) anliegend abgedichtet ist, und wobei die Führung der Bewegung des Verteilerkörpers (5) in der Aufnahmeöffnung (4) zumindest über die Dichtflächen (9, 10, 11) erfolgt.

## Beschreibung

Die Erfindung betrifft eine Vorrichtung zum Verteilen einer Kunststoffschmelze, insbesondere einer thermoplastischen Kunststoffschmelze. Die Vorrichtung weist gemäß dem Oberbegriff des Anspruchs 1 einen Gehäusegrundkörper auf, welcher zumindest einen Eintrittskanal und zumindest einen Austrittskanal für die Kunststoffschmelze aufweist, wobei zwischen dem zumindest einen Eintrittskanal und dem zumindest einen Austrittskanal zumindest eine Aufnahmeöffnung verläuft zur Aufnahme zumindest eines darin bewegbaren Verteilerkörpers, wobei der Verteilerkörper dort durchtretende Verteilerkanäle aufweist, durch welche die Kunststoffschmelze durchtritt, wobei in einer Durchlassposition des Verteilerkörpers über zumindest einen der Verteilerkanäle eine Fluidverbindung zwischen dem Eintrittskanal und dem Austrittskanal besteht, und wobei in einer Anfahrposition des Verteilerkörpers eine Fluidverbindung zwischen dem Eintrittskanal und dem zumindest einen der Verteilerkanäle besteht, wobei der Verteilerkanal eine Ableitungsöffnung für die Kunststoffschmelze aufweist.

Eine Vorrichtung zum Verteilen mit den Merkmalen gemäß dem Oberbegriff des Anspruchs 1 ist beispielsweise aus der Offenlegungsschrift DE 10 2005 007 102 A1 bekannt, wobei bei dieser gattungsbildenden Vorrichtung der dortige Verteilerkörper großflächig gegen die dortige Aufnahmeöffnung im Gehäuse anliegt.

Dabei kann es insbesondere bei langen Standzeiten dazu kommen, dass es durch Verfestigungen von Kunststoffschmelze z.B. während des Betriebs des Verteilers in Durchlassposition, zu einem Festsetzen des Verteilerkörpers in der Aufnahmeöffnung des Gehäuses kommen kann. Somit kann gegebenenfalls ein rasches Umschalten in die Anfahrposition erschwert oder sogar unmöglich gemacht werden, was die Betreibssicherheit einer Anlage mit einem solchen Verteiler deutlich vermindern kann.

Insbesondere bei niedrigviskosen Kunststoffschmelzen besteht bei Verteilern bzw. Anfahrventilen des Standes der Technik das Problem, dass sich die Kunststoffschmelze beispielsweise durch Kapillareffekte zwischen die Aufnahmeöffnung des Gehäusegrundkörpers und den Verteilerkörper dort großflächig festsetzt und aufgrund von niedrigerer Temperatur dort sich verfestigt, so dass eine Relativbewegung des entsprechenden Verteilerkörpers in der Aufnahmeöffnung im Gehäusegrundkörper insbesondere bei längeren Standzeiten nicht mehr möglich ist. Das verfestigte Kunststoffschmelze-Material ist gleichsam ein Klebstoff zwischen dem Gehäusegrundkörper und dem Verteilerkörper, welcher dadurch in der Aufnahmeöffnung festsitzt. Auch kann der Fall eintreten, dass Kunststoffschmelze, welche sich entsprechend festgesetzt hat, dort mit langer Verweilzeit verbleibt und aufgrund der für permanenten Verbleib doch recht hohen Temperatur, welcher sie dort ausgesetzt sein kann, sich dort zersetzt, d.h. vercrackt wird, was zu Schmutzeffekten in der Schmelze führen kann, insbesondere, wenn vercracktes Schmelzematerial durch Bewegung in der Vorrichtung doch (wieder) mit dem sonstigen Schmelzematerial in den Kanälen in Verbindung kommt.

Die Offenlegungsschrift DE 10 2009 014 029 A1 beschreibt ein Umschaltventil, bei welchem der dort in einer Ventilbohrung eines Gehäuses axial verschiebbare Ventilstößel die Einstellung verschiedener Fluidverbindungen erlaubt, wobei der Ventilstößel einen Bereich einer sogenannten Zulaufzone aufweist, welcher gegenüber den sonstigen Bereichen des Ventilstößels nutenförmig rückspringend ausgebildet ist. Dabei dient dieser Bereich der Zulaufzone allerdings zur Herstellung einer Fluidverbindung zwischen der dortigen Eintrittsöffnung und Austrittsöffnung im Gehäuse.

Der vorliegenden Erfindung liegt somit die Aufgabe zugrunde, eine Vorrichtung zum Verteilen einer Kunststoffschmelze vorzusehen, welche die Nachteile des Standes der Technik überwindet, und insbesondere eine Vorrichtung zum Verteilen einer Kunststoffschmelze vorzusehen, bei welcher auf konstruktiv einfache Weise eine im Betrieb zuverlässige, gegen Festsetzen durch verfestigte Kunststoffschmelze geschützte und dabei jederzeit betätigbare Verteilungsfunktion gewährleistet ist.

Diese Aufgabe wird erfindungsgemäß durch eine Vorrichtung mit den Merkmalen des Anspruchs 1 gelöst. Bevorzugte Ausführungsformen der Erfindung sind in den Unteransprüchen definiert.

Die erfindungsgemäße Vorrichtung zum Verteilen einer Kunststoffschmelze, insbesondere einer thermoplastischen Kunststoffschmelze, weist einen Gehäusegrundkörper auf, welcher zumindest einen Eintrittskanal und zumindest einen Austrittskanal für die Kunststoffschmelze aufweist, wobei zwischen dem zumindest einen Eintrittskanal und dem zumindest einen Austrittskanal zumindest eine Aufnahmeöffnung verläuft zur Aufnahme zumindest eines darin bewegbaren Verteilerkörpers, wobei der Verteilerkörper dort durchtretende Verteilerkanäle aufweist, durch welche die Kunststoffschmelze durchtritt, wobei in einer Durchlassposition des Verteilerkörpers über zumindest einen der Verteilerkanäle eine Fluidverbindung zwischen dem Eintrittskanal und dem Austrittskanal besteht, und wobei in einer Anfahrposition des Verteilerkörpers eine Fluidverbindung zwischen dem Eintrittskanal und dem zumindest einen der Verteilerkanäle besteht, wobei der Verteilerkanal eine Ableitungsöffnung für die Kunststoffschmelze aufweist. Erfindungsgemäß ist der Verteilerkörper nur über um die dort durchtretenden Verteilerkanäle herum angeordnete Dichtflächen gegenüber dem Gehäusegrundkörper im Bereich der Aufnahmeöffnung anliegend abgedichtet, und die Führung der Bewegung des Verteilerkörpers in der Aufnahmeöffnung erfolgt zumindest über die Dichtflächen.

Im Unterschied zu der zuvor beschriebenen gattungsbildenden bekannten Vorrichtung gemäß DE 10 2005 007 102 A1 ist bei der erfindungsgemäßen Vorrichtung also die anliegende Dichtfläche reduziert.

Erfindungsgemäß wird also nur im Bereich der Verteilerkanäle herum eine Abdichtung des Verteilerkörpers gegen den Grundkörper vorgesehen. Somit kommt es nicht zu einer großflächigen Anlagefläche des erfindungsgemäßen Verteilerkörpers in der erfindungsgemäßen Aufnahmeöffnung. Vielmehr ist lediglich eine jeweils lokal um die Verteilerkanäle vorgesehene Dichtfläche erfindungsgemäß vorhanden. Dies hat auch den Vorteil, dass es zu einem geringeren Wärmeübergang zwischen dem so gestalteten erfindungsgemäßen Verteilerkörper in dem Austrittskanal des erfindungsgemäßen Gehäusegrundkörpers kommt, was ebenfalls der Wärmeabfuhr und somit der Verfestigung von Kunststoffschmelze entgegenwirkt und somit ein Verkleben verhindern kann. Tritt dennoch Kunststoffschmelzematerial, beispielsweise insbesondere im Fall von niedrigviskosem Kunststoffschmelzematerial, in den Bereich jenseits der Dichtfläche aus, so besteht immer noch die Möglichkeit, dass dieses ausgetretene Material erfindungsgemäß z.B. einfach abfließen kann (besipielsweise einfach unter Schwerkrafteinfluss) ohne großflächig zwischen den Elementen der Vorrichtung zu verkleben.

Bevorzugt erfolgt die Führung der Bewegung des Verteilerkörpers in der Aufnahmeöffnung nur über die Dichtflächen. Die Bewegung des Verteilerkörpers kann somit einfach durch die anliegenden Dichtflächen in der Aufnahmeöffnung geführt werden. Ein Verkanten oder Festgehen des Verteilerkörpers auch in einer Relativbewegung in der Aufnahmeöffnung gegenüber dem Gehäusegrundkörper ist somit effektiv ausgeschlossen.

Erfindungsgemäß bevorzugt sind zusätzliche Führungsstege zwischen Verteilerkörper und Aufnahmeöffnung vorgesehen, mittels welchen eine zusätzliche Führung der Bewegung des Verteilerkörpers in der Aufnahmeöffnung erfolgt, wobei die Führungsstege bevorzugt an dem Verteilerkörper angeordnet sind. Durch die bevorzugt vorgesehenen Führungsstege kann eine besonders effektive Abstützung des Verteilerkörpers in der Aufnahmeöffnung gegenüber dem Gehäusegrundkörper erfolgen, ohne die Anlagefläche im Sinne des oben beschriebenen Standes der Technik unnötig zu vergrößern und die aus dem Stand der Technik bekannten Probleme zu ergeben.

Zwischen dem Verteilerkörper und der Aufnahmeöffnung besteht gemäß einer weiteren bevorzugten Ausführungsform der Erfindung ein radialer Abstand von durchschnittlich 1 mm, mit Ausnahme der anliegenden Dichtflächen oder Führungsstege. Eine verkantungsfreie Führung bei gleichzeitig einfacher und effektiver Abstandwahrung des Verteilerkörpers in der Aufnahmeöffnung gegenüber dem Gehäusegrundkörper kann so erfindungsgemäß bevorzugt durch den entsprechenden Abstand von bevorzugt durchschnittlich 1 mm erreichbar sein ohne zu große Toträume aufzuweisen.

Der Übergang zwischen den Dichtflächen sowie den Führungsstegen und den sonstigen Bereichen des Verteilerkörpers kann zweckmäßig kontinuierlich stufenlos ausgebildet sein. Die kontinuierlich stufenlose Ausbildung, beispielsweise durch Verrundung der Übergänge, gestattet es, dass erfindungsgemäß bevorzugt besonders effektiv das Anhaften von Kunststoffschmelze in den dortigen Bereichen aufgrund des Fehlens von ausgeprägten Kanten dort vermieden werden kann, was das Festsetzen besonders effektiv verhindert.

Bevorzugt weisen die Dichtflächen eine Mindestbreite von mindestens etwa 20 mm auf. Um eine effektive Dichtwirkung zu erzeugen, kann die Mindestbreite der Dichtflächen um die jeweiligen Kanäle herum in den entsprechenden Bereichen des Verteilerkörpers also mindestens 20 mm aufweisen.

Der Verteilerkörper kann axial zwischen der Anfahrposition und der Durchlassposition verschiebbar sein. Die Verschiebung kann dabei zweckmäßig durch eine Hydraulikvorrichtung erfolgen. Neben der axialen Verschiebung des Verteilerkörpers ist es auch denkbar, den Verteilerkörper bei entsprechender Anordnung von dem zumindest einen Eintrittskanal und dem zumindest einen Austrittskanal in dem Gehäusegrundkörper drehbar zwischen der Anfahrposition und der Durchlassposition zu gestalten, was besonders bauraumsparend sein kann.

Die Form der Aufnahmeöffnung und des Verteilerkörpers darin ist bevorzugt zylindrisch, im Fall der Relativbewegung durch Verdrehen könnte auch eine kegel- bzw. kegelstumpfförmige Formgebung denkbar sein. Dabei kann gemäß einer bevorzugten Ausführungsform der Erfindung im Querschnitt die Aufnahmeöffnung kreisförmig ausgebildet sein. Solche Formgebungen sind konstruktiv besonders einfach herstellbar und für den durchtretenden Schmelzestrom besonders strömungsgünstig, so dass der Betrieb einer so erfindungsgemäß gestalteten Vorrichtung besonders zuverlässig möglich sein kann. Bevorzugt sind also die Elemente der erfindungsgemäßen Vorrichtung im Querschnitt kreisförmig bzw. im Wesentlichen kreisförmig ausgebildet. Es ist aber auch denkbar, dass die entsprechend zylinderförmig bzw. kreisförmig bezeichneten Elemente der erfindungsgemäßen Vorrichtung auch mehreckig im Querschnitt ausgebildet sein können, also polygonale Formen aufweisen können, wobei besonders bevorzugt die Kantenbereiche dann kontinuierlich stufenlos (beispielsweise verrundet) ausgebildet sein können. Auch ellipsenförmige Querschnitte oder Querschnitte unter Einbeziehung von Kreissegment-Formen sind denkbar.

Es sei angemerkt, dass der in der vorliegenden Beschreibung verwendete Begriff Kunststoffschmelze insbesondere eine Polypropylen-, Polyethylen-, Hochdruckpolypropylen-, Niederdruckpolyethylen-, lineares Niederdruckpolyethylen-, Polystyrol-, Polyamid-, Acrylnitril-Butadien-Styrol-(ABS)-, Polyester, Polyoxymethylen-(POM)-, Polyacrylate-, Polymethylmetacrylate-(PMMA)- und Polyvinylchlorid-Schmelze bezeichnen kann. Selbstverständlich ist die Aufzählung nicht vollständig und auch nicht auf die aufgeführten Materialien beschränkt. Vielmehr kann mit der erfindungsgemäßen Vorrichtung jedes beliebige Schmelzematerial gehandhabt werden. Ein prinzipieller Ausschluss bestimmter Materialien besteht erfindungsgemäß nicht.

Die erfindungsgemäße Vorrichtung wird nachfolgend anhand der Zeichnung beispielhaft näher erläutert werden. Es zeigen:
- Fig. 1: eine schematische Darstellung einer erfindungsgemäßen Vorrichtung zum Verteilen einer Kunststoffschmelze in einer Durchlassposition im Längsschnitt;
- Fig. 2: eine schematische Darstellung der erfindungsgemäßen Vorrichtung zum Verteilen einer Kunststoffschmelze der Fig. 1 in einer Anfahrposition im Längsschnitt; und
- Fig. 3: einen Schnitt entlang der Linie A-A in Fig. 1.

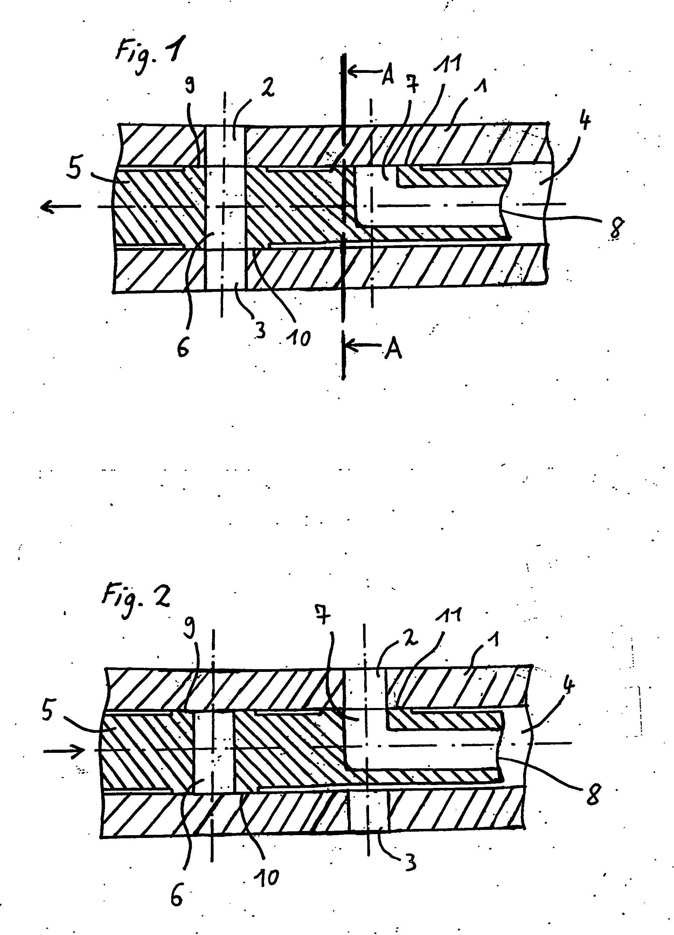

In Fig. 1 ist schematisch eine Vorrichtung zum Verteilen einer Kunststoffschmelze gemäß der Erfindung in einer Durchlassposition im Längsschnitt abgebildet. Die erfindungsgemäße Vorrichtung weist gemäß der Darstellung der Fig. 1 einen Gehäusegrundkörper 1 auf, welcher bevorzugt im Querschnitt kreisförmig ausgebildet sein kann und welcher sich in Längsrichtung ausgedehnt erstreckt, wobei der Gehäusegrundkörper 1 zumindest einen Eintrittskanal 2 und zumindest einen Austrittskanal 3 für die Kunststoffschmelze aufweist. In dem Gehäusegrundkörper 1 verläuft zwischen dem zumindest einen Eintrittskanal und dem zumindest einen Austrittskanal zumindest eine Aufnahmeöffnung 4. In dieser Aufnahmeöffnung 4 ist zumindest ein darin bewegbarer Verteilerkörper 5 angeordnet, wobei der Verteilerkörper 5 dort durchtretende Verteilerkanäle 6, 7 aufweist, welche die Kunststoffschmelze bei entsprechendem Durchtritt aufnehmen. In der in Fig. 1 gezeigten Durchlassposition des Verteilerkörpers 5, welcher gegenüber dem Gehäusegrundkörper 1 gemäß der gezeigten Ausführungsform in der Aufnahmeöffnung 4 axial verschiebbar gelagert ist, stellt der Verteilerkörper 5 über zumindest den Verteilerkanal 6 eine Fluidverbindung zwischen dem Eintrittskanal 1 und dem Austrittskanal 3 her.

In der in Fig. 2 gezeigten Anfahrposition des Verteilerkörpers 5 wird entsprechend eine Fluidverbindung zwischen dem Eintrittskanal 2 und dem anderen Verteilerkanal 7 in dem Verteilerkörper 5 hergestellt, wobei der Verteilerkanal 7 eine Ableitungsöffnung 8 für die Kunststoffschmelze aufweist.

Gemäß der Darstellung der Fig. 1 und auch der Fig. 2 ist der Verteilerkanal 7 so gestaltet, dass er mit der Ableitungsöffnung 8 zur Stirnfläche des Verteilerkörpers 5 angeordnet vorgesehen ist. Es kann auch denkbar sein, dass der Verteilerkanal 7 mit der Ableitungsöffnung 8 in Fluidverbindung zu einer Ableitungsöffnung im Gehäusegrundkörper 1 verlaufend angeordnet ist, so dass dann in der Anfahrposition eine entsprechende Fluidverbindung dort bestehen kann, wobei dann um die Ableitungsöffnung 8 und den Verteilerkanal 7 auch eine entsprechende Dichtfläche des Verteilerkörpers 5 gegenüber dem Gehäusegrundkörper 1 dort anliegend vorgesehen sein kann. Dies ist allerdings in den Fig. 1 und 2 nicht dargestellt, dem Fachmann allerdings entsprechend der erfindungsgemäßen Lehre ohne weiteres möglich.

Die Möglichkeit der axialen Bewegung des Verteilerkörpers 5 in der Aufnahmeöffnung 4 ist in den Fig. 1 und 2 jeweils durch einen Pfeil angedeutet.

Neben der axialen Bewegung ist es auch denkbar, dass der Übergang zwischen der Anfahrposition und der Durchlassposition erfindungsgemäß nicht durch axiale Bewegung des Verteilerkörpers 5 im Gehäusegrundkörper 1 bzw. in der Aufnahmeöffnung 3 des Gehäusegrundkörpers 1 erfolgt, sondern durch entsprechende Drehung des Verteilerkörpers 5.

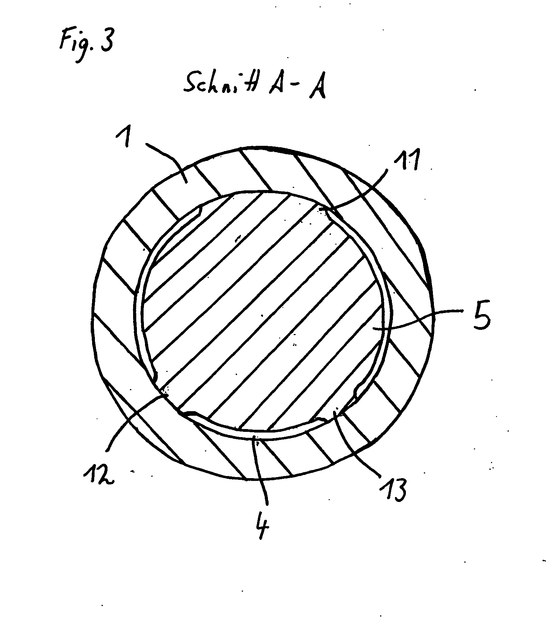

Erfindungsgemäß ist der Verteilerkörper 5 nur über um die dort durchtretenden Verteilerkanäle 6, 7 herum angeordnete Dichtflächen 9, 10, 11 gegenüber dem Gehäusegrundkörper 1 im Bereich der Aufnahmeöffnung 4 anliegend abgedichtet, und die Führung der Bewegung des Verteilerkörpers 5 in der Aufnahmeöffnung 4 erfolgt über diese Dichtflächen 9, 10, 11, wobei die Führung der Bewegung des Verteilerkörpers 5 in der Aufnahmeöffnung 4 auch über zusätzliche Führungsstege 12, 13 unterstützend erfolgen kann, wie dies weiter unten im Zusammenhang mit der Darstellung der Fig. 3 näher erläutert wird.

Die Fig. 3 zeigt die Ausführungsform der erfindungsgemäßen Vorrichtung entlang des Schnitts der Linie A-A der Fig. 1.

Wie aus Fig. 3 ersichtlich, sind zusätzliche Führungsstege 12, 13 zwischen dem Verteilerkörper 5 und der Aufnahmeöffnung 4 vorgesehen, mittels welchen eine zusätzliche Führung der Bewegung des Verteilerkörpers 5 in der Aufnahmeöffnung 4 erfolgt, und wobei die Führungsstege 12, 13 gemäß der Darstellung der Fig. 3 bevorzugt an dem Verteilergrundkörper 5 angeordnet sind. Prinzipiell könnte man sich auch eine Lösung vorstellen, bei welcher zumindest die zusätzlichen Führungsstege am Gehäusegrundkörper 1 in die Aufnahmeöffnung 4 ragend ausgebildet sein könnten und so den Verteilerkörper 5 dort führen könnten.

Wie ebenfalls aus der Schnittdarstellung der Fig. 3 ersichtlich, ist der Übergang wischen den Dichtflächen 9, 10, 11 sowie gegebenenfalls den Führungsstegen 12, 13 und den sonstigen Bereichen des Verteilerkörpers 5 kontinuierlich stufenlos ausgebildet, wobei der Übergang insbesondere kreissegmentförmig erfolgt, so dass scharfe Kanten entsprechend vermieden werden.

Wie weiter aus der Darstellung der Fig. 3 ersichtlich, ist erfindungsgemäß die Anlagefläche des Verteilerkörpers 5 gegenüber dem Gehäusegrundkörper 1 drastisch reduziert, so dass eine großflächige Wärmeabfuhr bzw. ein großflächiges Verkleben von Kunststoffschmelze zwischen dem Verteilerkörper und dem Gehäusegrundkörper somit erfindungsgemäß zuverlässig vermieden werden kann.

Mit der erfindungsgemäßen Vorrichtung kann auf einfache Weise konstruktiv ohne hohen baulichen Aufwand eine im Betrieb zuverlässige und dabei dennoch einfach und schnell zu betreibende Verteilungsvorrichtung erfindungsgemäß verwirklicht sein.

## Patentansprüche

1. Vorrichtung zum Verteilen einer Kunststoffschmelze, mit einem Gehäusegrundkörper (1), welcher zumindest einen Eintrittskanal (2) und zumindest einen Austrittskanal (3) für die Kunststoffschmelze aufweist, wobei zwischen dem zumindest einen Eintrittskanal (2) und dem zumindest einen Austrittskanal (3) zumindest eine Aufnahmeöffnung (4) verläuft zur Aufnahme zumindest eines darin bewegbaren Verteilerkörpers (5), wobei der Verteilerkörper (5) dort durchtretende Verteilerkanäle (6, 7) aufweist, durch welche die Kunststoffschmelze durchtritt, wobei in einer Durchlassposition des Verteilerkörpers (5) über zumindest einen der Verteilerkanäle (6) eine Fluidverbindung zwischen dem Eintrittskanal (2) und dem Austrittskanal (3) besteht, und wobei in einer Anfahrposition des Verteilerkörpers (5) eine Fluidverbindung zwischen dem Eintrittskanal (2) und dem zumindest einen der Verteilerkanäle (7) steht, wobei der Verteilerkanal (7) eine Ableitungsöffnung (8) für die Kunststoffschmelze aufweist,
**dadurch gekennzeichnet, dass**
der Verteilerkörper (5) nur über um die dort durchtretenden Verteilerkanäle (6, 7) herum angeordnete Dichtflächen (9, 10, 11) gegenüber dem Gehäusegrundkörper (1) im Bereich der Aufnahmeöffnung (4) anliegend abgedichtet ist, und dass die Führung der Bewegung des Verteilerkörpers (5) in der Aufnahmeöffnung (4) zumindest über die Dichtflächen (9, 10, 11) erfolgt.

2. Vorrichtung nach Anspruch 1, **dadurch gekennzeichnet, dass** die Führung der Bewegung des Verteilerkörpers (5) in der Aufnahmeöffnung (4) nur über die Dichtflächen (9, 10, 11) erfolgt.

3. Vorrichtung nach Anspruch 1, **dadurch gekennzeichnet, dass** zusätzliche Führungsstege (12, 13) zwischen Verteilerkörper (5) und Aufnahmeöffnung (4) vorgesehen sind, mittels welchen eine zusätzliche Führung der Bewegung des Verteilerkörpers (5) in der Aufnahmeöffnung (4) erfolgt, wobei die Führungsstege (12, 13) bevorzugt an dem Verteilerkörper (5) angeordnet sind.

4. Vorrichtung nach einem der Ansprüche 1 bis 3, **dadurch gekennzeichnet, dass** zwischen dem Verteilerkörper (5) und der Aufnahmeöffnung (4) ein radialer Abstand von durchschnittlich 1 mm besteht, mit Ausnahme der anliegenden Dichtflächen (9, 10, 11) oder Führungsstege (12, 13).

5. Vorrichtung nach einem der Ansprüche 1 bis 4, **dadurch gekennzeichnet, dass** der Übergang zwischen den Dichtflächen (9, 10, 11) sowie den Führungsstegen (12, 13) und den sonstigen Bereichen des Verteilerkörpers (5) kontinuierlich stufenlos ausgebildet ist.

6. Vorrichtung nach einem der Ansprüche 1 bis 5, **dadurch gekennzeichnet, dass** die Dichtflächen (9, 10, 11) eine Mindestbreite von 20 mm aufweisen.

7. Vorrichtung nach einem der Ansprüche 1 bis 6, **dadurch gekennzeichnet, dass** der Verteilerkörper (5) axial zwischen der Anfahrposition und der Durchlassposition verschiebbar ist.
